# EUROPEAN PATENT APPLICATION

(11) **EP 2 036 657 A2**
(43) Date of publication of application: **18.03.2009**
(21) Application number: 08252930.6
(22) Date of filing: 03.09.2008
(51) Int. Cl.: B23P 6/00, F01D 5/00, C23C 14/06, G06Q 10/00

(54) **Method of repairing a turbine engine component**

(30) Priority: 12.09.2007 US 853895
(71) Applicant: United Technologies Corporation, Hartford, CT 06101 (US)
(72) Inventor: McCall, Thomas, New Britain, CT 06053 (US); Boland, Robert M., Rocky Hills, CT 06067 (US); Pellet, Paul M., Arlington, TX 76006 (US); Quinn, Daniel E., Windsor, CT 06095 (US)
(74) Representative: Leckey, David Herbert

(57) **Abstract**

A method of repairing a turbine engine component (10) involves offering two repair options (14,18) to a customer. A first repair option (14) is based on an operating environment of the turbine engine component (10) and the second repair option (18) is based on cost. The first repair option (14) is priced higher than the second repair option (18). The turbine engine component (10) is examined. The turbine engine component (10) is then repaired according to the selected repair option (14,18).

## Description

### BACKGROUND OF THE INVENTION

This invention relates to a method of repairing a turbine engine component, such as a high pressure turbine nozzle segment.

A turbine engine has a number of components, such as a fan, a low pressure compressor, a high pressure compressor, a combustor, a low pressure turbine, a high pressure turbine, and an exhaust nozzle. Any one of these components as well as others may require repair following their operation in a particular environment.

One such type of repair involves re-coating the component. Generally, these parts are coated by the engine manufacturer with a coating designed to operate in a wide variety of environmental conditions. Because these conditions may be very hostile, the manufacturer may use a more durable coating suited for the most difficult environment that may be encountered by the turbine engine, which could be more expensive based upon increased durability. However, the turbine engine may operate in a less hostile environment for which a less durable coating would suffice, which could be less expensive. Nevertheless, when a turbine engine component comes in for repair, the repair organization will coat the turbine engine component with the same coating previously provided on the part. Such a coating may be uneconomical to the customer and more time consuming to apply.

A need therefore exists for a method of repairing a turbine engine component that accommodates a customer's need as occasioned by the operating environment of the turbine engine and reducing turnaround time.

### SUMMARY OF THE INVENTION

A method of repairing a turbine engine disclosed herein involves offering a customer at least two repair options. A first repair option is based on the operating environment of the turbine engine component while the second repair option is based on cost. The first repair option is priced higher than the second repair option. A customer may then select the repair option best suited for its needs. The turbine engine component is then repaired based on the selected repair option.

The various features and advantages of this invention will become apparent to those skilled in the art from the following detailed description. The drawings that accompany the detailed description can be briefly described as follows.

### BRIEF DESCRIPTION OF THE DRAWINGS

Figure 1 illustrates a turbine engine component, such as a nozzle segment.
Figure 2 illustrates an exploded view of the turbine engine component of Figure 1.
Figure 3 illustrates a method of repair of a turbine engine component.
Figure 4 illustrates a method of coating a turbine engine component using the inventive technique.
Figure 5 illustrates a method of examining and repairing a turbine engine component.

### DETAILED DESCRIPTION OF THE PREFERRED EMBODIMENT

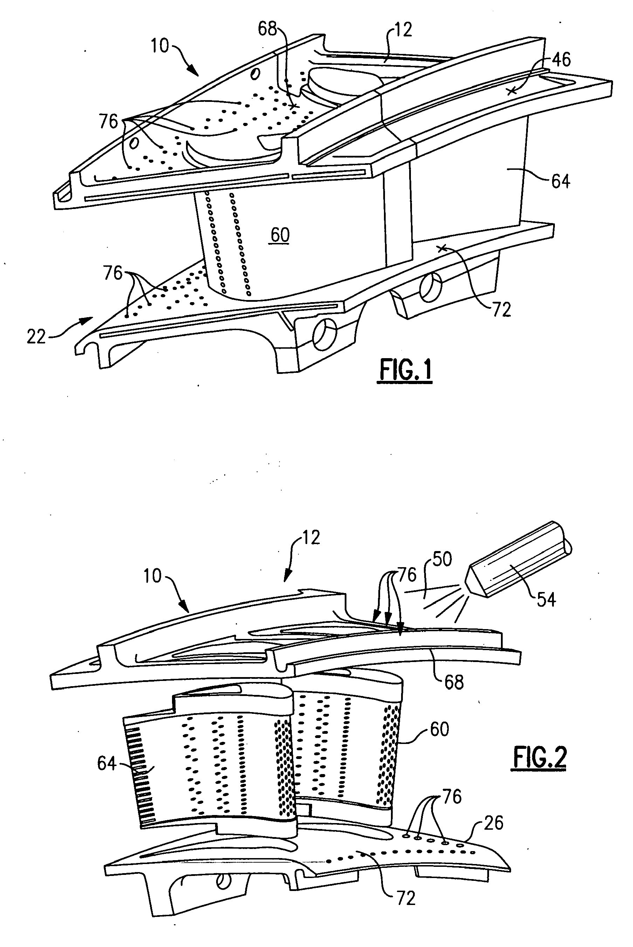

Figure 1 shows a view of a turbine engine component 10, such as high pressure turbine nozzle segment 12. Turbine nozzle segment 12 has lead air foil 60 and trailing air foil 64, sandwiched between outer panel 68 and inner panel 72. Lead air foil 60 and trailing air foil 64 may be brazed to outer panel 68 and inner panel 72. Turbine nozzle segment 12 forms a part of a high pressure turbine nozzle and may be originally coated with a platinum aluminum based coating, as part of the original manufacture of the part. Figure 2 shows turbine nozzle segment in an exploded view.

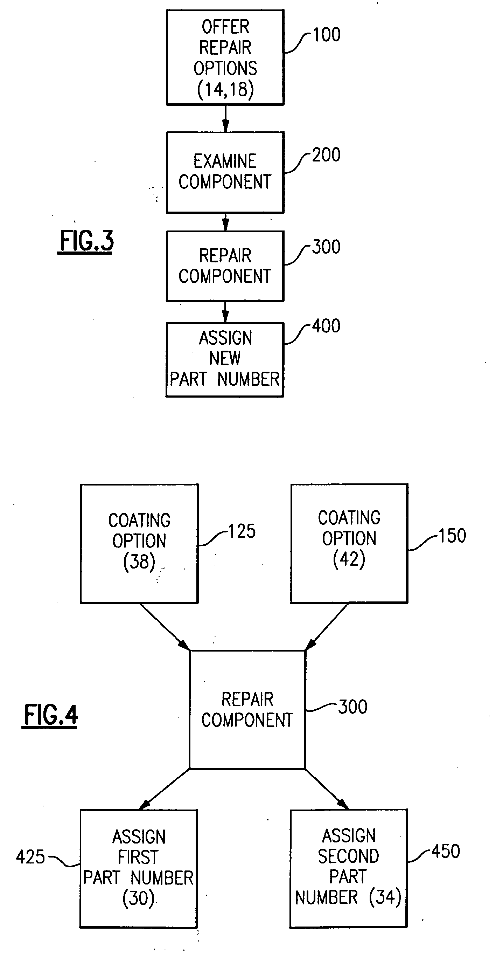

Figure 3 illustrates an inventive technique for repairing a turbine engine component 10, such as a turbine nozzle segment 12, as shown in Figure 1. With reference to Figure 3, a customer is presented with at least two repair options, first repair option 14 and second repair option 18, according to step 100. Turbine engine component 10 is examined by a repair organization (step 200) and then repaired according to the selected repair option (step 300), either first repair option 14 or second repair option 18. Then, according to step 400, a new part number is associated and assigned to turbine engine component 10 based on the selected repair option. For example, first repair option 14 has a part number that indicates first repair option 14 was selected by the customer while second repair option 18 has a different part number that indicates second repair option 18 was chosen.

The first repair option 14 may be based on an operating environment for the turbine engine component 10, while the second repair option 18 may be based on cost. In the embodiments, the first repair option 14 may be priced higher than the second repair option 18. For example, first repair option 14 may include preparing turbine engine component 10 to operate in a hostile corrosive environment. The second repair option 18 may involve a lower cost repair sufficient for a less hostile environment where corrosion is less of a concern. First repair option 14 allows turbine engine component 10 to have better wear characteristics for the hostile environment than second repair option 18.

Figure 4 illustrates an example of the unique method of repairing a turbine engine component 10, such as turbine engine nozzle segment 12. As shown, prior to repair step 300, a customer is presented with two coating options for turbine engine nozzle segment 12: first coating option 38, step 125, and second coating option 42, step 150. First coating option 38 may involve the application a coating, such as a platinum aluminum based coating, to turbine nozzle segment 12. Second coating option 42 may involve the application of an aluminide coating to turbine engine nozzle segment 12. First coating option 38 is more environmentally robust and typically more expensive than second coating option 42. Once the customer makes the selection between first coating option 38 and second coating option 42, then, in step 300, turbine nozzle segment 12 is repaired by applying the selected coating option through sprayer 54, such as by a gas phase process, as shown in Figure 2.

Following application of the selected coating, any pre-existing part number is replaced by a new part number indicating the selected coating option. As indicated by step 425, first part number 30 is assigned to turbine nozzle segment 12 if first coating option 38 is selected. If second coating option 42 is selected, then second part number 34 is assigned to turbine nozzle segment 12, as indicated by step 450. If there is no change in coating, then there is no change in part numbering.

Because the customer has first repair option 14, such as first coating option 38, and second repair option 18, such as second coating option 42, the customer may choose between the more environmentally robust first coating 46 and the cheaper second coating 50. The customer will generally know the operating environment for turbine engine component 10. By permitting the customer the option to choose between two different coatings with two different prices, the customer has the freedom to select the repair option best suited for its needs. Accordingly, when a turbine engine component 10 comes in for repair, the turbine engine component 10 is examined and repaired according to the selected repair option: either first repair option 14 or second repair option 18.

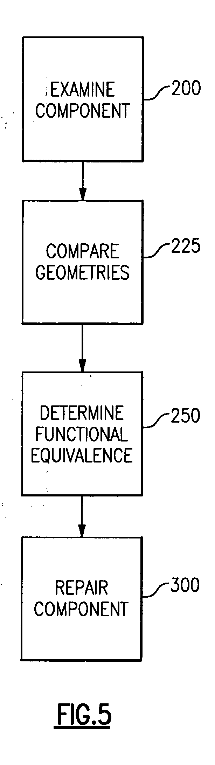

Another aspect of the invention is illustrated by Figure 5. Frequently, a turbine engine component 10 may have slightly different versions that follow its introduction. For example, as shown in Figures 1 and 2, turbine nozzle segment 12 may have cooling holes 76 that vary slightly in pattern from one version of turbine nozzle segment 12 to another but are, in fact, functionally equivalent. When turbine nozzle segment 12 is examined, the design of turbine nozzle segment 12 may be automatically updated to its latest configuration, which is the version of the part the manufacturer currently sells. Specifically, as indicated by step 200, a repair organization examines turbine nozzle segment 12. Turbine nozzle segment 12 may have a first design geometry 22 (see Figure 1), say a first cooling hole pattern of turbine nozzle segment 12. Then, as shown in step 225, the repair organization compares first design geometry 22 with a second design geometry 26, say an updated second cooling hole pattern. If first design geometry 22 and second design geometry 26 are determined to be functionally equivalent in step 250, then, in step 300, the repair center automatically repairs turbine engine component 10 based on second design geometry 26. With reference to Figure 2, the outer panel 68 and inner panel 72 are provided with second design geometry 26, the most updated cooling hole pattern.

As explained previously, following the repair of the turbine engine component 10, a part number is assigned to turbine engine component 10 based on the selected repair option. Because of the great variety of components coming in with subtle variations in geometry, the inventive technique also reduces the number of part numbers by associating only two different part numbers based on the selected repair option to the repair of the turbine engine component 10. In this way, a large number of part numbers associated with a turbine engine component can be reduced greatly, resulting in easier tracking and inventorying of parts.

The foregoing description shall be interpreted as illustrative and not in any limiting sense. A worker of ordinary skill in the art would recognize that certain modifications would come within the scope of this invention. For that reason, the follow claims should be studied to determine the true scope and content of this invention.

## Claims

1. A method of repairing a turbine engine component (10), comprising the steps of:
a) offering a first repair option (14) and a second repair option (18) for a turbine engine component to a customer, the first repair option (14) based on an operating environment of the turbine engine component (10) and the second repair option (18) based on cost, the first repair option (14) priced higher than the second repair option (18);
b) examining the turbine engine component (10); and
c) repairing the turbine engine component (10) based on a selection by the customer between the first repair option (14) and the second repair option (18).

2. The method of Claim 1 wherein the first repair option (14) comprises an application of a first coating (38) and the second repair option (18) comprises an application of a second coating (42), the first coating being different than the second coating.

3. The method of Claim 2 wherein the first coating (38) is a platinum aluminum based coating and the second coating (42) is an aluminide coating.

4. The method of Claim 2 or 3 wherein repairing comprises the step of coating the turbine engine component based on the selected repair option.

5. The method of any preceding Claim wherein examining comprises the step of comparing a first design geometry of the turbine engine component (10) with a second design geometry of another turbine engine component (10).

6. The method of Claim 5 including the step of determining the functional equivalence of the turbine engine component (10) with the another turbine engine component (10) based on a comparison of the first design geometry and the second design geometry.

7. The method of Claim 6 including the step of repairing the turbine engine component according to the second design geometry.

8. The method of any preceding Claim including the step of associating a first part number (30) with the first repair option (14) and a second part number (34) with the second repair option (18), the first part number (30) being different from the second part number (34).

9. The method of Claim 8 including the step of assigning one of the first part number (30) and the second part number (34) to the turbine component (10) based on the selected repair option (14,18).

10. The method of any preceding Claim wherein the turbine engine component (10) is a high pressure turbine nozzle segment.

11. A turbine engine component (10), comprising:
a turbine engine segment; and
a first coating disposed on said turbine engine segment (10), said first coating having different wear characteristics than a second coating previously applied to said turbine engine segment.

12. The turbine engine component of Claim 11 wherein said first coating is less environmentally robust than said second coating.

13. The turbine engine component of Claim 11 or 12 wherein said turbine engine component (10) has changed from a first design geometry to a second design geometry different from said first design geometry, said first design geometry previously on said turbine engine component and functionally equivalent to said second design geometry.

14. A method of repairing a turbine engine component comprising applying a coating to said component, said coating having different wear characteristics from a coating previously applied to the component.

15. A method of repairing a turbine engine component (10), comprising the steps of:
a) providing a first repair option (14) and a second repair option (18) for a turbine engine component;
b) examining the turbine engine component (10); and
c) repairing the turbine engine component (10) based on a selection between the first repair option (14) and the second repair option (18).
